Europäisches Patentamt

European Patent Office

Office européen des brevets

(11) Veröffentlichungsnummer: **0 195 994**
**A2**

# EUROPÄISCHE PATENTANMELDUNG

(21) Anmeldenummer: 86103562.4

(22) Anmeldetag: 17.03.86

(51) Int. Cl.⁴: **F28G 1/16** , F22B 37/48

(30) Priorität: 29.03.85 DE 3512100

(43) Veröffentlichungstag der Anmeldung:
01.10.86 Patentblatt 86/40

(84) Benannte Vertragsstaaten:
BE DE FR SE

(71) Anmelder: KRAFTWERK UNION
AKTIENGESELLSCHAFT
Wiesenstrasse 35
D-4330 Mülheim (Ruhr)(DE)

(72) Erfinder: Weber, Robert
Esperstrasse 23
D-8525 Uttenreuth(DE)
Erfinder: Forster, Josef
Amselweg 11
D-8526 Bubenreuth(DE)

(74) Vertreter: Mehl, Ernst, Dipl.-Ing. et al
Postfach 22 01 76
D-8000 München 22(DE)

(54) Rohrgassen-Manipulator zum Hochdruckabschlämmmen von Wärmetauschern.

(57) Für Wärmetauscher, deren Rohrgasse am Rohrboden durch Einbauten verbaut ist, ist zum Hochdruckabschlämmen ein Manipulator (1,10,15,17,22,30) vorgesehen, der an einer oberhalb des Rohrbodens anzuordnenden Führungsschiene - (1) geführt wird. Das zweigliedrige Schreitwerk (10,30) des Manipulators hängt formschlüssig (5,11) in der Führungsschiene und greift mit ausfahrbaren Zapfen (13, 36) in Löcher (6) der Führungsschiene ein. Mit dem einen Schreitwerksglied (10) ist ein Spritzkopfträger (15) verbunden, an dem sich ein teleskopartig (18,21) ausfahrbarer Spritzkopfhalter (17) für den mit Spritzdüsen (25) bestückten Spritzkopf - (22) befindet.

FIG.1

Rohrgassen-Manipulator zum Hochdruckabschlämmen von Wärmetauschern

Die Erfindung liegt auf dem Gebiet der Service-Technik für Wärmetauscher und ist bei der konstruktiven Ausgestaltung eines Manipulators anzuwenden, der längs der Rohrgasse bewegbar ist und zum Hochdruckabschlämmen des Wärmetauschers mit Spritzdüsen bestückt ist.

Bei einem bekannten Rohrgassen-Manipulator zum Hochdruckabschlämmen von Wärmetauschern wird ein die Spritzdüsen aufnehmender Spritzkopf von einem zweigliedrigen Schreitwerk bewegt, dessen Schreitwerksglieder jeweils mit mindestens einem Paar von Klemmfüßen ausgerüstet sind. Diese Klemmfüße sind an den beidseits der Rohrgasse verlaufenden Rohren arretierbar. Sofern die Breite der Rohrgasse durch Einbauten wie Zuganker vermindert ist, kann das Schreitwerk mit einer L-förmigen Führungsschiene kombiniert sein, deren senkrecht zum Rohrboden des Wärmetauschers verlaufender Schenkel die Abstützung des Schreitwerkes an der einen Seite der Rohrgasse bildet. Schreitwerk und Führungsschiene greifen dabei mittels einer Nut/Feder-Anordnung formschlüssig ineinander. Auch bei dieser speziellen Ausgestaltung des Manipulators ist die Schrittweite des Schreitwerkes auf die Rohrteilung längs der Rohrgasse abgestimmt. Im übrigen ist mit dem einen Schreitwerksglied ein Spritzkopfträger mit einem senkrecht zu Führungsschiene verfahrbaren und am Spritzkopfträger geführten Spritzkopfhalter gekoppelt. Dieser trägt den eigentlichen Spritzkopf mit einer oder mehreren Spritzdüsen (EP-OS 0 048 867, insbesondere Figuren 9 bis 11).

Bei bestimmten Wärmetauschern ist die Rohrgasse am Boden des Wärmetauschers zusätzlich durch Einbauten wie Dome, Rohrleitungen oder Stützstäbe verbaut. In diesen Fällen können die bekannten Rohrgassen-Manipulatoren nicht eingesetzt werden.

Ausgehend von einem Rohrgassen-Manipulator mit den Merkmalen des Oberbegriffes des Patentanspruches 1 liegt der Erfindung die Aufgabe zugrunde, den Rohrgassen-Manipulator so auszugestalten, daß er durch die Rohrgasse von Wärmetauschern geführt werden kann, deren Rohrgasse am Boden verbaut ist.

Zur Lösung dieser Aufgabe ist gemäß der Erfindung vorgesehen, daß der Schenkel der Führungsschiene in Abständen, die auf die Rohrteilung des Wärmetauschers abgestimmt sind, mit Bohrungen versehen ist, daß die ausfahrbaren Klemmfüße des Schreitwerkes als Zapfen ausgebildet sind, die in die Bohrungen der Führungsschiene eingreifen können, und daß der Spritzkopfhalter am Spritzkopfträger teleskopartig ausfahrbar angeordnet ist.

Bei einem derart ausgebildeten Rohrgassen-Manipulator wird die Führungsschiene oberhalb des Rohrbodens angeordnet und das Schreitwerk mit Spritzkopfträger und Spritzkopf in die Führungsschiene eingehängt. Dabei ist die Orientierung des Schreitwerkes an der Rohrteilung durch die Bohrungen in der Führungsschiene gegeben, deren Abstände der Rohrteilung entsprechen. Infolge der teleskopartigen Ausfahrbarkeit des Spritzkopfhalters kann dieser im Bereich der am Rohrboden befestigten Einbauten soweit wie erforderlich nach oben gefahren und beidseits der Einbauten so tief wie notwendig abgesenkt werden, ohne daß der Spritzkopfträger mit den Einbauten kollidiert.

Bezüglich der teleskopartigen Ausfahrbarkeit des Spritzkopfhalters kann man derart vorgehen, daß Spritzkopfträger und Spritzkopfhalter etwa gleich lang sind und zueinander parallel verschoben werden können. Dies läßt sich beispielsweise dadurch realisieren, daß im Spritzkopfhalter ein Ritzel gelagert ist, welches in eine Zahnschiene am Spritzkopfträger eingreift. Unterschiedliche, arretierbare Höhenpositionen des Spritzkopfhalters kann man dadurch gewährleisten, daß im Spritzkopfhalter wenigstens ein federbelasteter Raststift angeordnet ist, dem im Spritzkopfträger eine Reihe von Rastlöchern zugeordnet ist.

Zur Ausfahrbarkeit des Spritzkopfhalters kann auch ein Mehrfachteleskop oder ein Scherengestänge verwendet werden.

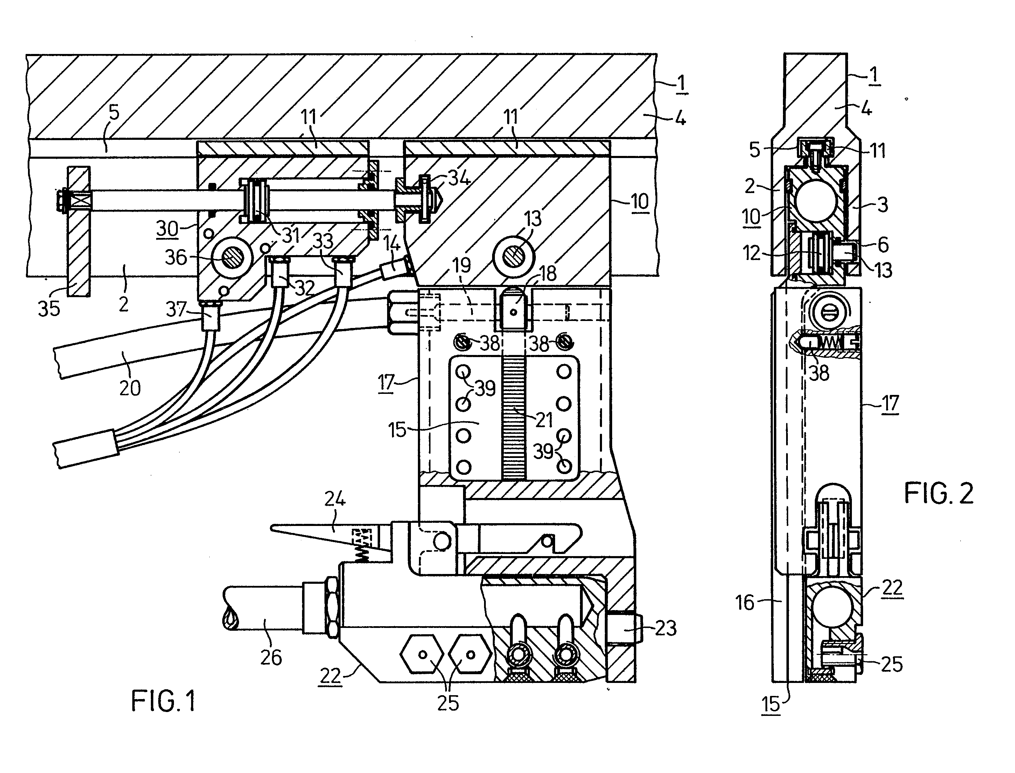

Ein Ausführungsbeispiel des neuen Rohrgassen-Manipulators ist in den Figuren 1 und 2 in zwei Ansichten mit teilweiser Querschnittsdarstellung wiedergegeben.

Die Figuren zeigen eine Führungsschiene 1, in die ein Schreitwerk mit den beiden Schreitwerksgliedern 10 und 30 eingehängt ist, wobei sich an dem vorderen Schreitwerksglied 10 der Spritzkopfträger 15 mit dem Spritzkopfhalter 17 und dem daran befestigten Spritzkopf 22 befinden.

Die Führungsschiene 1 ist U-förmig mit den beiden Schenkeln 2 und 3 ausgebildet, wobei sich im Basisteil 4 eine Nut 5 befindet. In diese Nut greift formschlüssig eine Feder 11 ein, die an dem vorderen Schreitwerksglied 10 und in gleicher Weise an dem hinteren Schreitwerksglied 30 befestigt ist. In dem einen Schenkel 3 der Führungsschiene 1 sind Löcher 6 vorgesehen, in welche Zapfen 13 eingreifen können. Diese Zapfen sind an einem Hubkolben 12 angeordnet, der sich im Schreitwerksglied 10 befindet und über einen Hydraulikanschluß 14 mit Druck bzw. Unterdruck beaufschlagt wird.

Das vordere Schreitwerksglied 10 ist einstückig mit dem Spritzkopfträger 15 ausgebildet, der seitlich mit Schienen 16 versehen ist. Auf diesen Schienen ist der plattenförmige Spritzkopfhalter 17 geführt. In diesem Spritzkopfhalter ist ein Ritzel 18 gelagert, an dessen Welle 19 eine biegsame Welle 20 anschließbar ist. Das Ritzel 18 greift in eine Zahnschiene 21 ein, die am Spritzkopfträger 15 befestigt bzw. in diesen eingelassen ist. Die Fixierung des Spritzkopfhalters an unterschiedlichen Positionen auf dem Spritzkopfträger wird mit Hilfe von zwei federbelasteten Raststiften 38 gewährleistet, die im Spritzkopfhalter 17 angeordnet sind und die in jeweils in eine Reihe von Rastlöchern 39 im Spritzkopfträger 15 einrasten können.

Am unteren Ende des Spritzkopfhalters 17 befindet sich der eigentliche Spritzkopf 22, der mit Hilfe eines Zapfens 23 und eines federbelasteten, einklinkbaren Hebels 24 am Spritzkopfhalter befestigt ist. Der Spritzkopf ist mit vier Spritzdüsen 25 versehen, die von dem Flüssigkeitsanschluß 26 gespeist werden.

Anstelle der dargestellten Düsen 25 mit kurzer Düsenlänge können auch Düsen mit wesentlich größerer Düsenlänge eingesetzt werden, sofern diese schwenkbar sind. Sie müssen dann im Ruhezustand nach unten weisen und im Betriebszustand um 90° nach oben geschwenkt werden. Dies kann beispielsweise mit Hilfe eines Bowdenzuges bewerkstelligt werden.

Zur schrittweisen Bewegung des Rohrgassen-Manipulators längs der Führungsschiene 1 ist noch das hintere Schreitwerksglied 30 vorgesehen, das mit dem eigentlichen Antrieb des Schreitwerkes ausgerüstet ist. Dieser besteht aus einem hydraulischen Hubkolben 31 mit den zugeordneten Hydraulikanschlüssen 32 und 33. Am vorderen Ende des Hubkolbens 31 ist ein Zapfen 34 vorgesehen, der in eine entsprechende Öffnung am vorderen Schreitwerksglied 10 einklinkbar ist. Zur Betätigung dieses Zapfens ist am hinteren Ende des Hubkolbens 31 ein türklinkenartiger Hebel 35 vorgesehen, der beim Betrieb des Rohrgassen-Manipulators durch die beiden Schenkel 2 und 3 der Führungsschiene 1 arretiert ist. -Am hinteren Schreitwerksglied 30 ist in gleicher Weise wie am vorderen Schreitwerksglied 10 ein Hubkolben mit einem Zapfen 36 vorgesehen, der ebenfalls in die Löcher 6 im Schenkel 3 der Führungsschiene 1 eingreifen kann. Zur Betätigung dieses Zapfens ist der Hydraulikanschluß 37 vorgesehen.

Im vorliegenden Fall ist das Schreitwerk derart dimensioniert, daß die Schrittweite und damit die Hublänge des Hubkolbens 31 ein Drittel des Abstandes betragen, der im Ruhezustand des Schreitwerkes zwischen den beiden ausfahrbaren Zapfen 13 und 36 vorhanden ist. Diese Schrittweite entspricht dabei der Rohteilung des Wärmetauschers in der Rohrgasse.

Die Fixierung der Führungsschiene 1 im Wärmetauscher erfolgt an entsprechenden Einbauten des Wärmetauschers. Sofern die Rohrgasse nur durch ein Handloch an dem einen Ende der Rohrgasse zugänglich ist, kann man die Führungsschiene an ihrem handlochfernen Ende mit einer ausklappbaren Fußstütze versehen. In jedem Fall ist zu gewährleisten, daß die Löcher 6 im Schenkel 3 der Führungsschiene mit der Rohrteilung im Wärmetauscher längs der Rohrgasse übereinstimmt. Dies kann beispielsweise mit Hilfe von Prismenbacken erreicht werden, die längs der Führungsschiene befestigt sind und sich im montierten Zustand an wenigstens zwei Heizrohren des Wärmetauschers abstützen.

## Ansprüche

1. Rohrgassen-Manipulator zum Hochdruckabschlämmen von Wärmetauschern, bestehend

-aus einem zweigliedrigen Schreitwerk, daß längs einer in der Rohrgasse anzuordnenden, mit einem senkrechten Schenkel versehenen Führungsschiene geführt ist, wobei das Schreitwerk und die Führungsschiene formschlüssig ineinander greifen und die Schrittweite des Schreitwerkes auf die Rohrteilung längs der Rohrgasse abgestimmt ist und die Schreitwerkglieder in der jeweiligen Schrittposition mit Hilfe ausfahrbarer Klemmfüße fixierbar sind,

-aus einem mit dem einen Schreitswerksglied gekoppelten Spritzkopfträger mit einem senkrecht zur Führungsschiene verfahrbaren und am Spritzkopfträger geführten Spritzkopfhalter

-und aus einem Spritzkopf mit einer oder mehreren Spritzdüsen

**dadurch gekennzeichnet,**

-daß der Schenkel (3) der Führungsschiene (1) in Abständen, die auf die Rohrteilung des Wärmetauschers abgestimmt sind, mit Bohrungen (6) versehen ist,

-daß die ausfahrbaren Klemmfüße des Schreitwerkes - (10,30) als Zapfen (13,36) ausgebildet sind, die in die Bohrungen der Führungsschiene eingreifen können,

-und daß der Spritzkopfhalter (17) am Spritzkopfträger (15) teleskopartig ausfahrbar angeordnet ist.

2. Rohrgassen-Manipulator nach Anspruch 1, **dadurch gekennzeichnet,** daß im Spritzkopfhalter (17) ein Ritzel (18) gelagert ist, welches in eine Zahnschiene (21) am Spritzkopfträger (15) eingreift.

3. Rohrgassen-Manipulator nach Anspruch 2, **dadurch gekennzeichnet,** daß im Spiritkopfhalter (17) wengistens ein federbelasteter Raststift (38) angeordnet ist, dem im Spritzkopfträger eine Reihe von Rastlöchern (39) zugeordnet ist.

FIG.1

FIG.2

0 195 994